# EUROPÄISCHE PATENTSCHRIFT

(11) **EP 2 028 027 B1**
(45) Veröffentlichungstag und Bekanntmachung des Hinweises auf die Patenterteilung: **31.03.2010**
(21) Anmeldenummer: 07114808.4
(22) Anmeldetag: 23.08.2007
(51) Int. Cl.: B60G 11/64, B60G 21/055, B60G 21/073

(54) **Querstabilisator zur Verbindung von Federelementen**
Stabilizer for connecting spring elements
Stabilisateur pour relier des éléments de ressort

(43) Veröffentlichungstag der Anmeldung: 25.02.2009
(73) Patentinhaber: Ford Global Technologies, LLC, Dearborn, MI 48126 (US)
(72) Erfinder: Wolf-Monheim, Friedrich, 52074 Aachen (DE)
(74) Vertreter: Drömer, Hans-Carsten

(56) Entgegenhaltungen:
- WO-A-91/13707
- WO-A-93/11953
- DE-A1- 10 110 452
- DE-A1-102005 045 177
- DE-T- 19 882 122
- JP-A- 2002 144 838
- US-A- 3 550 992
- US-A- 3 556 542

## Beschreibung

Die Erfindung betrifft eine Vorrichtung zur schaltbaren Variierung der Rollsteifigkeit eines Kraftfahrzeugs, - mit einem Fahrwerk und wenigstens zwei daran gelagerten Rädern, die über Federelemente an den Enden eines Stabilisators abgestützt sind, wobei die Arbeitsräume der Federelemente miteinander verbunden sind.

Derartige Vorrichtungen sind auch unter der Bezeichnung X-Link-Systems bekannt. Als pneumatisches Fluid wird in der Regel Luft verwendet. Dabei sind die Arbeitsräume der beiden zu einem Radpaar gehörenden Federelemente, die vorzugsweise als Luftfederelemente, aber auch als hydropneumatische Federelemente ausgeführt sein können, durch eine gesonderte Leitung miteinander verbunden, so daß durch Öffnen der pneumatischen bzw. hydraulischen Querverbindung, insbesondere bei Geradeausfahrt auf unebener Fahrbahn die Rollsteifigkeit des Fahrzeugs im Vergleich zu einem System mit abgeschalteter Querverbindung reduziert werden kann.

Eine bekannte Vorrichtung der eingangs beschriebenen Gattung weist neben zusätzlichen Federn eine Steuerung auf, die über einen in der gesonderten Leitung angeordneten Ventilblock in das System eingreifen kann (DE 10 2005 045 177 A1, DE 198 82 122 T1). Andere Ausführungen arbeiten zwar mit einer Regelung aber ohne Stabilisator (US 2 807 475, WO 02/068229 A1, DE-AS 1 222 390, DE 687 37 036 T2).

Bekannt sind ferner Stabilisatoren aus Hohlprofilen (EP 0 518 929 B1, JP 2002 144 838 A, WO 2006/056307 A1, FR 2 531 015 A1) und Stabilisatoren, die in einem Hohlprofil untergebracht sind (JP 590 29 506 Abstracts, KR 100 167 702 B1 Abstracts).

Der Erfindung liegt die Aufgabe zugrunde, eine Vorrichtung der Eingangs genannten Gattung so zu vereinfachen, daß Material- und Montagekosten eingespart werden können.

Diese Aufgabe wird dadurch gelöst, daß der Stabilisator als hohler Strömungskanal ausgebildet ist und jedes seiner Enden beweglich und druckdicht mit einem der Federelemente verbunden ist. Dadurch werden Material und Montage der gesonderten Leitung eingespart. Der Stabilisator ist bevorzugt als Querstabilisator ausgeführt.

Vorzugsweise können biegsame Schläuche als Verbindung zwischen den Enden des Stabilisators und den zugeordneten Federelementen bzw. Hydraulik- bzw. Pneumatikzylindern eingesetzt werden, die unterschiedliche Bewegungen ausgleichen. Druckdichte Schraubverbindungen zwischen den Schläuchen und den Enden des Stabilisators bzw. den Federelementen sichern die Verbindung zwischen den Arbeitsräumen der Federelemente.

Für den Anschluß einer Regelung oder Steuerung kann im Bereich der Schläuche oder des Stabilisators ein Schaltventil angeordnet sein.

Die mit der Erfindung erreichten Vorteile bestehen zusammengefaßt darin, daß eine gesonderte Leitung zwischen den Arbeitsräumen der Federelemente bzw. den Hydraulik- oder Pneumatikzylindern und deren Montage entfallen können. Vielmehr wird der Stabilisator bzw. der Querstabilisator als Verbindungsleitung verwendet, so daß dieser eine Doppelfunktion aufweist. Zum einen dient der Stabilisator dazu seine bekannte Aufgabe auszuführen. Zum anderen dient der Stabilisator als Verbindungsleitung bzw. als Druckausgleichsleitung zwischen den Federelementen. Damit ergeben sich auch Kostenvorteile und Platzersparnisse.

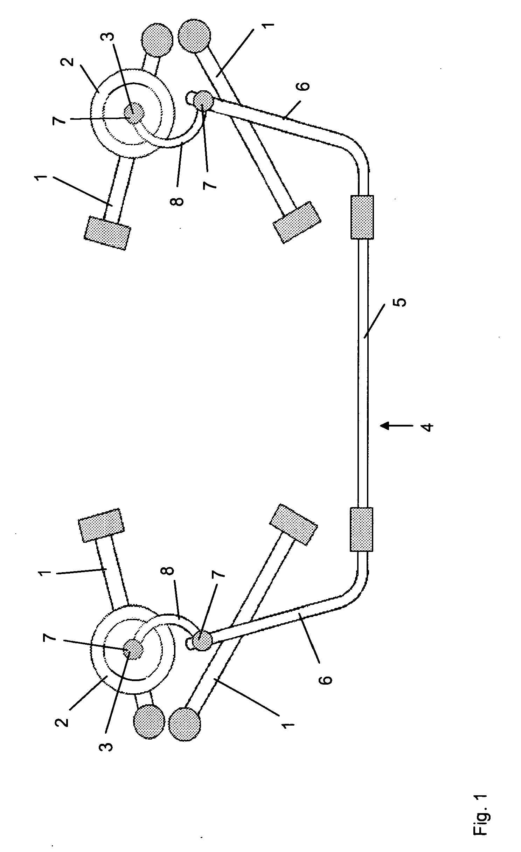

Im Folgenden wird ein Ausführungsbeispiel der Erfindung beschrieben: Die einzige Figur 1 zeigt schematisch eine Radaufhängung mit Stabilisator an der Vorderachse eines Kraftfahrzeugs.

Man erkennt je zwei einzelne Lenker 1 auf beiden Seiten der Zeichnungsebene, die am nicht dargestellten Fahrgestell schwenkbar gelagert und an deren äußeren Enden die nicht gezeichneten Radträger mit Rädern gelagert sind. Je einer der Lenker 1 beider Seiten ist mit jeweils einem am Fahrgestell angeordneten Federelement 2, welche jeweils bevorzugt als hydraulische bzw. pneumatische Federelemente ausgeführt, und mit zugeordneten Lufteinlässen 3 versehen sind, verbunden.

Ein U-förmiger Stabilisator 4 bzw. Querstabilisator ist mit seinem U-Steg 5 am Fahrgestell schwenkbar gelagert und greift mit seinen U-Bügeln 6 vorzugsweise über Koppelstangen an dem jeweiligen Lenker 1 an. Der Stabilisator 4, 5, 6 besteht aus einem Hohlprofil. Die Enden der U-Bügel 6 sind über druckdichte Verbindungen 7, vorzugsweise druckdichte Schraubverbindungen und biegsame Schläuche 8 mit den Arbeitsräumen der Federelemente 2 verbunden, so daß ein Druckausgleich zwischen den Arbeitsräumen möglich ist.

Nicht dargestellt ist ein Schaltventil zum Anschluß einer Steuerung oder Regelung, das im Bereich des Stabilisators 4, 5, 6 oder der Schläuche 8 oder der Lufteinlässe 3 angeordnet sein kann.

## Patentansprüche

1. Vorrichtung zur schaltbaren Variierung der Rollsteifigkeit eines Kraftfahrzeugs,
- mit einem Fahrwerk und wenigsten zwei daran gelagerten Rädern, die über Federelemente (2) an den Enden eines Stabilisators (4, 5, 6) abgestützt sind, wobei die Arbeitsräume der Federelemente (2) miteinander verbunden sind,
**dadurch gekennzeichnet, daß**
der Stabilisator (4, 5, 6) als hohler Strömungskanal ausgebildet ist und daß jedes seiner Enden (6) beweglich und druckdicht mit einem der Federelemente (2) verbunden ist.

2. Vorrichtung nach Anspruch 1,
**gekennzeichnet durch**
biegsame Schläuche (8) als Verbindung zwischen den Enden (6) des Stabilisators (4, 5, 6) und den zugeordneten Federelementen (2).

3. Vorrichtung nach Anspruch 1 oder 2,
**gekennzeichnet durch**
druckdichte Verbindungen (7) zwischen den Schläuchen (8) und den Enden (6) des Stabilisators (4, 5, 6) bzw. den Federelementen (2).

4. Vorrichtung nach einem der Ansprüche 1 bis 3,
**dadurch gekennzeichnet, daß**
im Bereich der Schläuche (8) oder des Stabilisators (4, 5, 6) oder der Federelemente (2) ein Schaltventil angeordnet ist.

## Claims

1. Device for the switchable variation of the rolling resistance of a motor vehicle,
- with a chassis and at least two wheels which are mounted thereon and are supported via spring elements (2) at the ends of a stabilizer (4, 5, 6),
the working spaces of the spring elements (2) being connected to one another,
**characterized in that**
the stabilizer (4, 5, 6) is designed as a hollow flow duct, and **in that** each of its ends (6) is connected movably, and pressure-tight, to one of the spring elements (2).

2. Device according to Claim 1,
**characterized by**
flexible hoses (8) as a connection between the ends (6) of the stabilizer (4, 5, 6) and the assigned spring elements (2).

3. Device according to Claim 1 or 2,
**characterized by**
pressure-tight connections (7) between the hoses (8) and the ends (6) of the stabilizer (4, 5, 6) or the spring elements (2).

4. Device according to one of Claims 1 to 3,
**characterized in that**
a switching valve is arranged in the region of the hoses (8) or of the stabilizer (4, 5, 6) or of the spring elements (2).

## Revendications

1. Dispositif pour faire varier de manière commutable la rigidité au roulis d'un véhicule automobile,
- comprenant un châssis et au moins deux roues montées sur celui-ci, qui sont supportées par le biais d'éléments de ressort (2) aux extrémités d'un stabilisateur (4, 5, 6), les espaces de travail des éléments de ressort (2) étant connectés les uns aux autres,
**caractérisé en ce que**
le stabilisateur (4, 5, 6) est réalisé sous forme de canal d'écoulement creux et **en ce que** chacune de ses extrémités (6) est connectée de manière mobile et étanche à la pression à l'un des éléments de ressort (2).

2. Dispositif selon la revendication 1,
**caractérisé par**
des tuyaux flexibles (8) servant de connexion entre les extrémités (6) du stabilisateur (4, 5, 6) et les éléments de ressort associés (2).

3. Dispositif selon la revendication 1 ou 2,
**caractérisé par**
des connexions étanches à la pression (7) entre les tuyaux (8) et les extrémités (6) du stabilisateur (4, 5, 6) ou les éléments de ressort (2).

4. Dispositif selon l'une quelconque des revendications 1 à 3,
**caractérisé en ce que**
l'on dispose une soupape de commutation dans la région des tuyaux (8) ou du stabilisateur (4, 5, 6) ou des éléments de ressort (2).
